(19) Europäisches Patentamt
European Patent Office
Office européen des brevets

(11) **EP 4 692 720 A1**

(12) **EUROPEAN PATENT APPLICATION**
published in accordance with Art. 153(4) EPC

(43) Date of publication:
**11.02.2026 Bulletin 2026/07**

(21) Application number: **24780147.5**

(22) Date of filing: **25.03.2024**

(51) International Patent Classification (IPC):
***G01C 11/36*** (2006.01)

(52) Cooperative Patent Classification (CPC):
**G01C 11/36**

(86) International application number:
**PCT/JP2024/011633**

(87) International publication number:
**WO 2024/204029 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058216**

(71) Applicant: Topcon Corporation
**Tokyo 174-8580 (JP)**

(72) Inventors:
• **SASAKI, Takeshi**
**Tokyo 174-8580 (JP)**
• **SHIGETA, Masahiro**
**Tokyo 174-8580 (JP)**

(74) Representative: **Schmitt-Nilson Schraud Waibel
Wohlfrom
Patentanwälte Partnerschaft mbB
Pelkovenstraße 143
80992 München (DE)**

(54) **SURVEYING METHOD, SURVEYING SYSTEM, AND PROGRAM**

(57) The accuracy of three-dimensional data based on images captured by a camera mounted on a moving object is improved. Image data of a captured image captured by a camera 101 that moves while being mounted on a heavy machine 100 is obtained. A total station 200 measures a position of a reflective prism 102 that is a specific part fixed to the camera 101. A position of the camera 101 is calculated based on the measured position of the reflective prism 102. There is a deviation between a time of measurement of the position of the reflective prism 102 and a time of capturing by the camera 101. Adjustment calculation with the position of the camera 101 as an unknown number is performed in the calculation of the position of the camera 101. The adjustment calculation is performed based on the measured position of the reflective prism 101 to which a correction amount corresponding to the deviation between the times is added.

Fig. 1

EP 4 692 720 A1

**Description**

[Technical Field]

The present invention relates to surveying techniques.

[Background Art]

There have been known techniques for measuring the position of a heavy machine using a surveying apparatus (see, e.g., Patent Literature 1).

[Citation List]

[Patent Literature]

[Patent Literature 1] Japanese Patent Laid-Open No. 8-43093

[Summary of Invention]

[Technical Problem]

Mounting a camera on a heavy machine and obtaining three-dimensional data of its surroundings based on Structure from Motion (SfM) requires determination of the position of the camera. The present invention aims to improve the accuracy of three-dimensional data based on images captured by a camera mounted on a moving object.

[Solution to Problem]

The present invention is a surveying method comprising: obtaining image data of a captured image captured by a camera that moves; measuring a position of a specific part fixed to the camera; and calculating a position of the camera based on the measured position of the specific part, wherein there is a deviation between a time of measurement of the position of the specific part and a time of capturing of the captured image, adjustment calculation with the position of the camera as an unknown number is performed in the calculation of the position of the camera, and the adjustment calculation is performed based on the position of the specific part to which a correction amount corresponding to the deviation between the times is added.

The present invention includes an aspect in which a process of calculating an initial value for the adjustment calculation is performed, and in the process of calculating the initial value, a process is performed, the process being a process of determining correspondence between a start of movement and/or an end of movement of the position of the camera in a local coordinate system calculated based on the captured image captured by the camera and a start of movement and/or an end of movement of the position of the specific part in a global coordinate system.

The present invention includes an aspect in which a process of calculating an initial value for the adjustment calculation is performed, and in the process of calculating the initial value, correspondence is determined between a change in the position of the camera in a local coordinate system calculated based on the captured image captured by the camera and a change in the position of the specific part in a global coordinate system.

The present invention includes an aspect in which the changes in the positions are evaluated based on an angle formed by a first straight line connecting a first position and a second position and a second straight line connecting the second position and a third position.

The present invention is a surveying system comprising: means for obtaining image data of a captured image captured by a camera that moves; means for measuring a position of a specific part fixed to the camera; and means for calculating a position of the camera based on the measured position of the specific part, wherein there is a deviation between a time of measurement of the position of the specific part and a time of capturing of the captured image, adjustment calculation with the position of the camera as an unknown number is performed in the calculation of the position of the camera, and the adjustment calculation is performed based on the position of the specific part to which a correction amount corresponding to the deviation between the times is added.

The present invention is a program that a computer is caused to read and execute, the program causing the computer to execute: acquisition of image data of a captured image captured by a camera that moves; acquisition of measurement data of a position of a specific part fixed to the camera; and calculation of a position of the camera based on the measured position of the specific part, wherein there is a deviation between a time of measurement of the position of the specific part and a time of capturing of the captured image, adjustment calculation with the position of the camera as an unknown number is performed in the calculation of the position of the camera, and the adjustment calculation is performed based on the position of the specific part to which a correction amount corresponding to the deviation between the times is added.

[Advantageous Effects of Invention]

The present invention can improve the accuracy of three-dimensional data based on images captured by a camera mounted on a moving object.

[Brief Description of Drawings]

[Figure 1] Figure 1 is a conceptual diagram of an embodiment.
[Figure 2] Figure 2 is a conceptual diagram illustrating the relationship between the position of a camera and the position of a prism.
[Figure 3] Figure 3 is a block diagram of a computing apparatus.
[Figure 4] Figure 4 is a diagram illustrating the principle of initial value matching.
[Figure 5] Figure 5 is a flowchart illustrating an example of the procedure of a process.

[Description of Embodiments]

1. First Embodiment

(Overview)

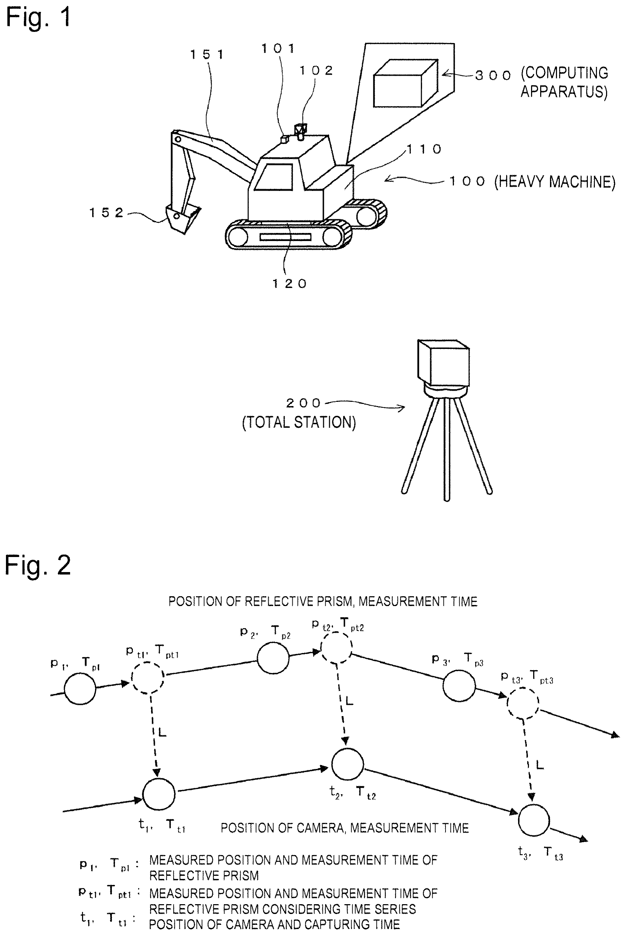

Figure 1 shows a heavy machine 100 for civil engineering work and a total station 200 that is a surveying apparatus for measuring the position of the heavy machine 100. A mounted camera 101 captures images during the operation of the heavy machine 100. Then, 3D data of surroundings of the heavy machine 100 is acquired based on the principle of Structure from Motion (SfM). At this time, the total station 200 repeatedly and continuously measures the position of a reflective prism 102 mounted on the heavy machine 100 while tracking the reflective prism 102. The above 3D data is obtained as data in the global coordinate system based on measurements of the position of this reflective prism 102. For example, Japanese Patent Laid-Open No. 2013-186816 and other documents describe the principle of SfM. The global coordinate system is a coordinate system used in maps or GNSS.

(Heavy Machine)

The heavy machine 100 is a power shovel. The power shovel is an example. The type of the heavy machine is not particularly limited as long as it is a heavy machine for civil engineering work. The heavy machine 100 includes a base part 120 that runs on the ground using a caterpillar and a rotating part 110 that rotates horizontally on the base part 120. The rotating part 110 includes a driver's seat and an arm 151. A bucket 152 is provided at the front end of the arm 151. The structures of them are the same as those of regular power shovels.
The camera 101 and the reflective prism 102 are fixedly disposed on top of the rotating part 110. The position of the camera 101 and/or the position of the reflective prism 102 on the rotating part 110 may be known or unknown. Further, even when the position is known, it may be an approximate position and contain an error. When the position of the camera 101 and/or the position of the reflective prism 102 is unknown or contains an error, adjustment calculation optimizes those positions.
The camera 101 is a digital still camera that continuously and repeatedly captures still images. Since the heavy machine 100 runs and the rotating part 110 rotates during the operation of the heavy machine 100, the camera 101 faces various directions. Thus, the camera 101 captures images of surroundings of the heavy machine 100 during the operation of the heavy machine 100. It is also possible to employ a depth camera as the camera 101. It is also possible to employ a configuration in which a camera for capturing video is used as the camera 101 and frame images constituting video are used as still images. Although Figure 1 shows an example of disposing a single camera 101 on the heavy machine 100, it is also possible to dispose a plurality of cameras directed in multiple directions. Further, it is also possible to use a stereo camera.
The reflective prism 102 is an optical reflective target used for surveys using laser light. Here, an entire circumferential reflective prism is used as the reflective prism 102. The reflective prism 102 reflects incident light with its orientation changed by 180°. It is possible to use a reflective target with retroreflective characteristics as the optical reflective target in addition to a reflective prism.

The position of the heavy machine 100 is recognized as the position of the center of gravity of the heavy machine. It is also possible to recognize the position of the heavy machine 100 as the position of the camera 101 or the reflective prism 102, some point on the rotation center axis of the rotating part 110, or some other position on the heavy machine 100.

The heavy machine 100 includes a computing apparatus 300. The computing apparatus 300 is a computer. It is also possible to provide the computing apparatus 300 outside the heavy machine 100. The computing apparatus 300 performs a process related to creation of a three-dimensional model of a capturing object based on images captured by the camera 101. This process includes a process related to calculation of the position of the camera 101. Details of the configuration and process of the computing apparatus 300 will be described later.

(Total Station)

The total station 200 is an example of a surveying apparatus capable of measuring positions. The total station 200 includes a positioning function using laser light, a camera, a clock, a storage device for survey data, a communication interface, a user interface, a function to search for a survey object (the reflective prism 102), and a function to track the survey object even when it moves. It is possible to use commonly available models as the total station 200.

Prior to processing, the position and posture of the total station 200 in the global coordinate system have been acquired and regarded as known data. Note that the position of the total station 200 is recognized as the position of the optical origin of an optical system for ranging.

The heavy machine 100 starts working in a state where the total station 200 aims at the reflective prism 102 and is locked. While the heavy machine 100 is working, the total station 200 repeatedly measures the position of the reflective prism 102 while tracking it. The interval between measurements is about 0.05 seconds (20 Hz) to 5 seconds (0.2 Hz).

(Basic Processing Flow)

3D data of a capturing object is created based on images captured by the camera 101 mounted on the heavy machine 100 in accordance with the following principle. The camera 101 repeatedly and continuously captures still images. The position and posture of the camera 101 change during the operation of the heavy machine 100, and at that time, the capturing interval of the camera 101 is determined so that captured images adjacent to each other on the time axis overlap. A specific capturing interval is set to about several Hz to 30 Hz. Basically, the following process creates a three-dimensional model of a capturing object using SfM based on images captured by the camera during the operation of the heavy machine 101.

(1) Relative Orientation

A relative three-dimensional model in any scale is created based on images captured by the camera 101, and the relative relationship is identified between feature points identified between a plurality of images and the positions and postures of the camera 101 at the time of capturing the images. Specifically, common feature points between stereo images are extracted, and the relative relationship is identified between the feature points and the positions and postures of the camera at a plurality of viewpoints (capturing positions).

(2) Adjustment Calculation

Simultaneously performing bundle adjustment calculation and adjustment calculation considering the positional relationship and the deviation in measurement time between the reflective prism 102 and the camera 101 optimizes the position and posture of the camera 101 and the positions of the feature points in the global coordinate system. This results in point cloud data that describes the positions of the feature points in the global coordinate system.

(3) Creation of 3D Model

A 3D model of an object is created based on the point cloud data optimized by the above adjustment calculation. Examples of the 3D model include a data conversion of the outline of the object, a digital elevation model (DEM), a triangulated irregular network (TIN), and other models. For example, International Publication No. WO 2011/070927, Japanese Patent Laid-Open No. 2012-230594, Japanese Patent Laid-Open No. 2014-35702, and other documents describe the creation of a 3D model based on point cloud data.

(Dealing with Problem of Unsynchronized Time)

In this example, the clock of a control system that controls capturing by the camera 101 (the function to determine the time for processing) is unsynchronized with the clock of a control system that controls operation related to measurement of the position by the total station 200. For example, reducing the costs, employing a simple configuration, or other factors can cause this situation.

The lack of synchronization between the camera 101 and the total station 200 described above causes an error due to a difference in operation timing between the two during the above adjustment calculation. In other words, since the camera 101 captures images while moving, the lack of synchronization between the time of capturing by the camera 101 and the time of measurement of the reflective prism 102 by the total station 200 causes an error in a calculation result.

This embodiment makes the following devices to deal with this problem. Figure 2 shows the relationship between the position of the reflective prism 102 and the position of the camera 101 (the position at the time of image capturing). The solid circle ($p_i$, $T_{pi}$) (i = 1, 2, 3...) indicates the position of the reflective prism 102 measured by the total station 200 (the surveying apparatus) and the measurement time thereof.

The dashed circle ($p_{ti}$, $T_{pti}$) indicating the position of the reflective prism 102 and the measurement time thereof shows the position and time of the reflective prism 102 in consideration of the time series (in consideration of deviations in synchronization between the times). This is the position and time of the reflective prism 102 that would be measured if the times were synchronized. In other words, the solid circle ($p_i$, $T_{pi}$) indicates the position and time of the reflective prism 102 that are actually measured, and the dashed circle ($p_{ti}$, $T_{pti}$) indicates the position and time of the reflective prism 102 that would be measured if the times were synchronized.

Here, to reduce an error caused by the lack of synchronization described above, adjustment calculation using a constraint condition expression in Expression 1 below is performed.

[Expression 1]

$$\sum_{i=1}^{m} \left\{ -p'_{ti} - L' - t'_i \right\}$$

-$p'_{ti}$: The position of the reflective prism 102 in the local coordinate system considering the time series
$L'$: The offset amount between the position of the camera 101 and the position of the reflective prism 102
$t'$: The position of the camera 101 in the local coordinate system

Here, -$p'_{ti}$ is a function of the position of the reflective prism 102 in the global coordinate system measured by the total station 200, the time of capturing by the camera 101, and the time of positioning of the reflective prism 102, and includes a correction term proportional to the difference between the two times. This correction term determines the position $p_{ti}$ of the dashed circle based on the position $p_i$ of the solid circle in Figure 2 (the position of the reflective prism 102 actually measured). (-$p'_{ti}$ - $L'$) is the position of the camera in the local coordinate system considering the time series of deviations in synchronization calculated from the measurement of the position of the reflective prism 102 by the total station 200.

Here, the local coordinate system is a coordinate system that describes the positional relationship between the position and posture of the camera 101 and feature points extracted from images captured by the camera 101.

The above constraint condition expression, which is set up in the local coordinate system, is an expression for calculating, for each position of the camera, the difference between the position (-$p'_{ti}$ - $L'$) of the camera considering the time series of deviations in synchronization calculated from the measurement of the position of the reflective prism 102 by the total station 200 and the position $t'_i$ of the camera, which is an unknown number to be calculated finally, and calculating the sum of the differences.

The following will describe the position -$p'_{ti}$ of the reflective prism 102 considering the time series. Here, the i-th position of the reflective prism 102 measured by the total station 200 is assumed to be slightly deviated from the corresponding position of the reflective prism 102 at the time of capturing of the captured image by the camera 101. This deviation is due to asynchronous time information (clocks) used.

This deviation is assumed to be smaller than the difference between the i-th and (i+1)-th positions of the reflective prism 102 measured by the total station 200, as shown in Figure 2. Since the difference between the i-th and (i+1)-th positions of the reflective prism 102 is small, this deviation is assumed to correspond to the difference between the time of positioning of the reflective prism 102 and the time of capturing by the camera 101.

Specifically, the reflective prism 102 at the time of capturing is assumed to be located at the position moved in the direction from the i-th position of the reflective prism 102 measured by the total station 200 to the (i+1)-th position by the above deviation amount. This deviation amount is defined as a correction term proportional to the difference between the time of positioning of the reflective prism 102 and the time of capturing by the camera 101. In other words, the corresponding position of the prism at the time of capturing is assumed to be located at the position shifted from the i-th position of the prism measured by the total station 200 toward the (i+1)-th position of the prism by this correction term.

This makes it possible to obtain a mathematical expression that can quantitatively compare the position (-p'$_{ti}$ - L') of the camera 101 calculated from the measurement of the position of the reflective prism 102 by the total station 200 with the position t'$_i$ of the camera 101 at the time of capturing by the camera 101. This is the constraint condition expression in Expression 1 above.

Bundle adjustment calculation using this constraint condition expression can calculate the posture and position of the camera 101 in the global coordinate system. The bundle adjustment calculation sets up an observation equation in Expression 2 below for each luminous flux in each image based on a collinearity condition under which a luminous flux (bundle) connecting three points: a feature point obtained from the captured image of the capturing object, a point on the captured image, and the center of projection must be on the same straight line, and simultaneously adjusts the coordinates (Xj, Yj, Zj) of the feature point and the parameters (X$_{oi}$, Y$_{oi}$, Z$_{oi}$, a$_{11i}$ to a$_{33i}$) of the position and posture of the camera 101 using the least square method.

The adjustment calculation in this embodiment sets up the constraint condition expression in Expression 1 described before and the observation equation in Expression 2 below, and optimizes the parameters (the feature point (Xj, Yj, Zj) and the position (X$_{oi}$, Y$_{oi}$, Z$_{oi}$) and the posture (a$_{11}$i to a$_{33i}$ (the rotation matrix)) of the camera 101) using the least square method.

[Expression 2]

$$\sum_{i=1}^{m}\sum_{j=1}^{n}\left\{-c\frac{a_{11i}(X_j-X_{0i})+a_{12i}(Y_j-Y_{0i})+a_{13i}(Z_j-Z_{0i})}{a_{31i}(X_j-X_{0i})+a_{32i}(Y_j-Y_{0i})+a_{33i}(Z_j-Z_{0i})}-x_{ij}\right\}^2$$

$$\sum_{i=1}^{m}\sum_{j=1}^{n}\left\{-c\frac{a_{21i}(X_j-X_{0i})+a_{22i}(Y_j-Y_{0i})+a_{21i}(Z_j-Z_{0i})}{a_{31i}(X_j-X_{0i})+a_{32i}(Y_j-Y_{0i})+a_{33i}(Z_j-Z_{0i})}-y_{ij}\right\}^2$$

c: The screen distance (focal length)
(Xj, Yj, Zj): The three-dimensional coordinates of a feature point of interest
(x$_{ij}$, y$_{ij}$): The coordinates on the image (on the screen) of the point j on the image i
(X$_{oi}$, Y$_{oi}$, Z$_{oi}$): The position of the camera 101 in capturing the photograph i
(a$_{11}$i to a$_{33i}$): The rotation matrix representing the posture of the camera 101 in capturing the photograph i.

In Expression 2 above, the three-dimensional coordinates of the feature point in the local coordinate system obtained by SfM is used as the initial value of (Xj, Yj, Zj). (X$_{oi}$, Y$_{oi}$, Z$_{oi}$) and (a$_{11i}$ to a$_{33i}$) are unknown numbers, and are calculated by adjustment calculation using Expression 1 and Expression 2. Note that although (X$_{oi}$, Y$_{oi}$, Z$_{oi}$) and (a$_{11i}$ to a$_{33i}$) are unknown numbers, a result of initial value matching described later is used as the initial value. Further, since a rough relationship between the local coordinate system and the global coordinate system has been calculated by the initial value matching, the initial value of (Xj, Yj, Zj) is a value close to the true value in the global coordinate system to a certain degree, although it also contains an error. These circumstances enhance the convergence and accuracy of the adjustment calculation. The position of the reflective prism 102 measured by the total station 200 is used as (X$_{pi}$, Y$_{pi}$, Z$_{pi}$).

The adjustment calculation in this embodiment sets up the constraint condition expression in Expression 1 described before and the observation equation in Expression 2 below, and optimizes the parameters (the feature point (Xj, Yj, Zj) and the position (X$_{oi}$, Y$_{oi}$, Z$_{oi}$) and the posture (a$_{11i}$ to a$_{33i}$ (the rotation matrix)) of the camera 101) using the least square method. Note that it is also possible to employ a method of performing the adjustment calculation in Expression 2 after performing the adjustment calculation in Expression 1.

The adjustment calculation using Expression 1 and Expression 2 calculates the residual of Expression 1 and Expression 2 using the feature point (Xj, Yj, Zj), the exterior orientation elements (X$_{oi}$, Y$_{oi}$, Z$_{oi}$, a$_{11i}$ to a$_{33i}$ (the rotation matrix representing the posture)), and (L$_X$, L$_Y$, L$_Z$) as parameters. At this time, the least square method is used to search for a combination of (Xj, Yj, Zj), (X$_{oi}$, Y$_{oi}$, Z$_{oi}$, a$_{11i}$ to a$_{33i}$), and (L$_X$, L$_Y$, L$_Z$) such that the above residual converges. Here, (L$_X$, L$_Y$,

$L_Z$) is the offset amount in the X, Y, and Z directions between the position of the camera 101 and the position of the reflective prism 102.

Specifically, adding a correction amount to the parameters $(X_j, Y_j, Z_j)$, $(X_{oi}, Y_{oi}, Z_{oi}, a_{11i}$ to $a_{33i})$, and $(L_X, L_Y, L_Z)$ so that the residual indicated by Expression 1 and Expression 2 decreases and simultaneously calculating Expression 1 and Expression are repeated. Then, a combination of the unknown parameters $(X_j, Y_j, Z_j)$, $(X_{oi}, Y_{oi}, Z_{oi}, a_{11i}$ to $a_{33i})$, and $(L_X, L_Y, L_Z)$ that satisfies convergence conditions for Expression 1 and Expression 2 is identified. A sufficiently small residual and a sufficiently small change in the residual from the previous calculation (the state where the fluctuation in the calculation result has converged) are used as the convergence conditions.

(Configuration of Computing Unit)

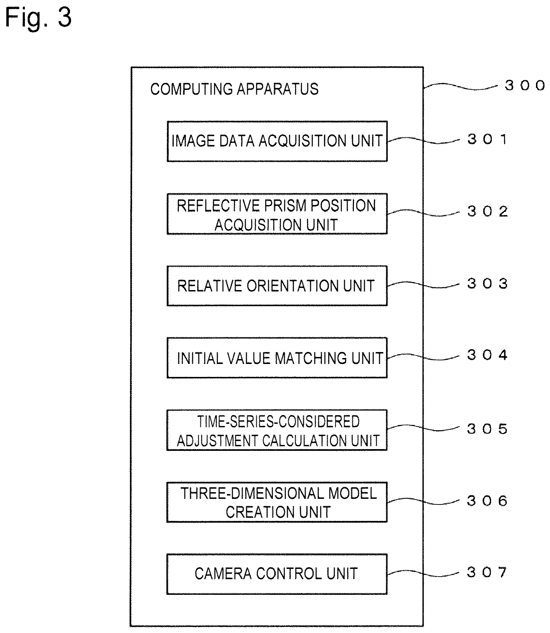

Figure 3 is a block diagram of the computing apparatus 300. The computing apparatus 300, which is a computer, includes a CPU, a storage device, and various interfaces. The computing apparatus 300 includes an image data acquisition unit 301, a reflective prism position acquisition unit 302, a relative orientation unit 303, an initial value matching unit 304, a time-series-considered adjustment calculation unit 305, a three-dimensional model creation unit 306, and a camera control unit 307.

The computer constituting the computing apparatus 300 implements these functional units in a software manner. Dedicated hardware can also constitute some or all of the above functional units. It is also possible to employ a configuration in which the computing apparatus 300 is provided outside the heavy machine 100. For example, it is possible to employ a configuration in which the computing apparatus 300 is provided on a processing server connected to the Internet and the processing server performs operations, or to employ other configurations.

The image data acquisition unit 301 receives image data of a captured image captured by the camera 101. The image data is associated with the capturing time. The time of a clock included in the camera control unit 309 is used as the capturing time. The reflective prism position acquisition unit 302 receives data of the position of the reflective prism 102 measured by the total station 200. The time of a clock included in the total station 200 is used as the measurement time of this data. The position and posture of the total station 200 in the global coordinate system are known. The position data of the reflective prism 102 is obtained in the global coordinate system.

The relative orientation unit 303 calculates the relationship between a large number of feature points extracted from images captured by the camera 101 and the position and orientation of the camera 101 based on the principle of SfM. This relationship is identified in the local coordinate system. The following will briefly describe the principle of this process. Now, suppose that there are a captured image 1 captured by the camera 101 at a first position and a captured image 2 captured from a second position slightly shifted from the first position. Further, suppose that the captured ranges of the captured image 1 and the captured image 2 overlap each other. The relationship between a large number of feature points extracted from this overlapped range, the positional relationship between the first position and the second position, and also the postures of the camera at the first position and the second position is calculated from the principle of three-dimensional photogrammetry (stereo photogrammetry). This is the process of relative orientation.

This process calculates the position and posture of the camera 101 at each capturing viewpoint position in the local coordinate system. Note that when no scale is given, the local coordinate system is a coordinate system with an unknown scale that describes a relative positional relationship. It is non-essential to give a scale, but if a scale is in the captured image, the local coordinate system is given a scale.

The initial value matching unit 304 identifies the initial value of correspondence between the position and time of the camera 101 described in the local coordinate system and the position and time of the reflective prism 102 described in the global coordinate system. The adjustment calculation described before uses this initial value. It can also be said that this initial value matching is a process of calculating an approximate relationship between the local coordinate system and the global coordinate system used in the relative orientation described above.

The following will describe an example of a process in the initial value matching unit 304. Processes in three stages described below perform the initial value matching. The process in the first stage focuses on the start of movement of the position of the camera 101 and the start of movement of the position of the reflective prism 102 to identify the correspondence between the two positions. This process focuses on the starting points of movement to identify the corresponding points (positions) of the two. Further, it is possible to focus on the end points of movement (the stop points) to identify the corresponding points.

This process determines the correspondence between the timing of the start of movement and/or the end of movement of the position of the reflective prism 102 measured by the total station 200 (the position in the global coordinate system) and the timing of the start of movement and/or the end of movement of the position of the camera 101 calculated based on the image captured by the camera 101 (the position in the local coordinate system).

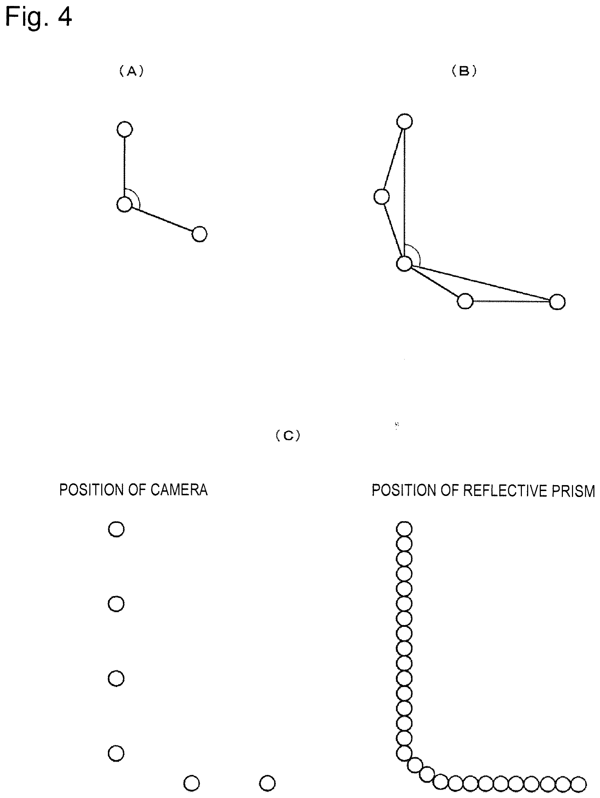

The process in the second stage follows the process in the first stage. The process in the second stage performs a process focusing on changes in positions. Figure 4(A) shows the principle. In Figure 4(A), a circle indicates the position of the camera 101 or the position of the reflective prism 102. In this case, the angle formed by three consecutive points is calculated for all points (all the positions of the camera and all the positions of the reflective prism). Then, the formed angle on the camera side is compared with the formed angle on the reflective prism side to search for the combination that minimizes the sum of absolute differences.

For example, suppose that the above formed angles for the positions of the camera 101 are $\theta_{c1}, \theta_{c2}, \theta_{c3}, \theta_{c4} \ldots \theta_{cn}$ and the above formed angles for the positions of the reflective prism 102 are $\theta_{p1}, \theta_{p2}, \theta_{p3}, \theta_{p4} \ldots \theta_{pn}$. In this case, for each of different combinations, the difference between each of the formed angles $\theta_{c1}, \theta_{c2}, \theta_{c3}, \theta_{c4} \ldots \theta_{cn}$ and its corresponding one of the formed angles $\theta_{p1}, \theta_{p2}, \theta_{p3}, \theta_{p4} \ldots \theta_{pn}$ is calculated, and the sum of the absolute values of the differences is calculated. The positions of the combination that minimizes this sum are employed as the corresponding combination.

For example, the sum of the absolute values of $\theta_{p1} - \theta_{c1}, \theta_{p2} - \theta_{c2}, \theta_{p3} - \theta_{c3}$, the sum of the absolute values of $\theta_{p2} - \theta_{c1}, \theta_{p3} - \theta_{c2}, \theta_{p4} - \theta_{c3}$, the sum of the absolute values of $\theta_{p3} - \theta_{c1}, \theta_{p4} - \theta_{c2}, \theta_{p5} - \theta_{c3}, \ldots$ are all calculated, and the combination with the smallest sum is searched for among them.

This method compares the change in the position of the reflective prism 102 in the global coordinate system with the change in the position of the camera 101 in the local coordinate system to identify the correspondence between the two. Determining this correspondence further improves the accuracy of the initial value matching from the first stage.

In the process in the second stage, the interval of calculation of the position of the camera 101 and the interval of measurement of the position of the reflective prism 102 are desirably as close to (ideally identical to) each other as possible. Figure 4(C) shows a case where the interval of calculation of the position of the camera 101 is 1 second (1 Hz) and the interval of measurement of the position of the reflective prism 102 is 0.2 seconds (5 Hz). In this case, measuring points of the position of the reflective prism 102 are acquired at a rate of one out of every five points (i.e., the sampling frequency is set to 1/5) to match the rate to the interval of calculation of the position of the camera 101. Matching this interval of measurement of the position facilitates the comparison. This method is also effective in the process in the first stage.

Figure 4(B) shows a case of calculating the angle formed by three points spaced apart. Such a configuration in Figure 4(B) can easily cause more pronounced differences between formed angles and thus improve the accuracy of the comparison.

The process in the third stage follows the process in the second stage. The process in the third stage determines the correspondence between the position of the camera and the position of the reflective prism using the least square method. This process calculates the transformation matrix from the local coordinate system to the global coordinate system. Using this transformation matrix converts data in the local coordinate system (feature points, and the position and posture of the camera) into that in the global coordinate system. The transformation matrix calculated here and the result of transformation by the transformation matrix are used as the initial value for the subsequent adjustment calculation.

The above alignment process in three stages can obtain the initial value of the relationship between the global coordinate system and the local coordinate system that describes the relationship between the position of the camera of each captured image and feature points obtained by the relative orientation.

The time-series-considered adjustment calculation unit 305 performs the adjustment calculation using Expression 1 and Expression 2 described in relation to Figure 2. This adjustment calculation uses the result of the above initial value matching.

The three-dimensional model creation unit 306 creates a three-dimensional model of the capturing object based on point cloud data that is data of the positions of feature points in the global coordinate system obtained as a result of the adjustment calculation. This example creates a three-dimensional model of terrain around the heavy machine 100 captured while the heavy machine 100 is working. Tracking changes of this three-dimensional model on the time axis can convert the content of work by the heavy machine 100 (changes of the terrain) into data.

The camera control unit 307 controls determination of the timing of capturing by the camera 101. When the camera 101 itself has a function for this control, the camera control unit 307 outputs a signal instructing the camera to start and stop capturing.

(Example of Process)

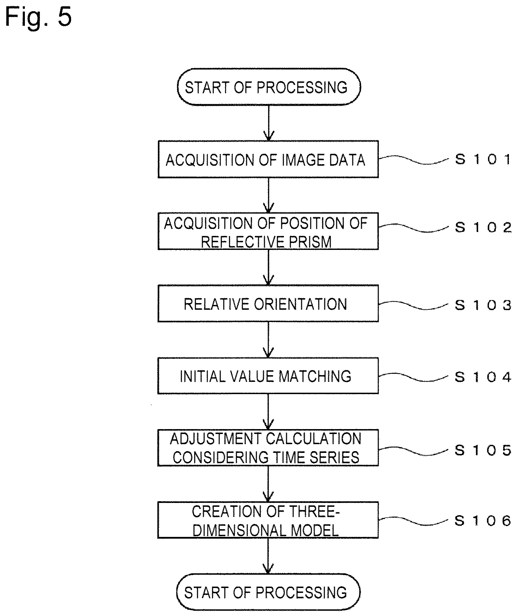

Figure 5 is a flowchart illustrating an example of the procedure of a process in the computing apparatus 300 in Figure 3. The storage device of the computer constituting the computing apparatus 300 or an appropriate storage medium stores a program for executing the process in Figure 5, and the computer executes the program.

First, the premise of the process will be described. Here, it is assumed that the camera 101 and the reflective prism 102 are fixed to the heavy machine 100 and the separation L between the camera 101 and the reflective prism 102 is known. L may be inaccurate. Further, L may be unknown. In this case, the adjustment calculation calculates L.

The position of the camera 101 and the position of the reflective prism 102 on the heavy machine 100 are assumed to be unknown. Further, the camera 101 repeatedly captures images during the operation of the heavy machine 100. The total station 200 continuously and repeatedly measures the position of the reflective prism 102. The position and posture of the total station 200 in the global coordinate system are known. Further, the time of capturing by the camera is unsynchronized with the time of positioning of the reflective prism 101 by the total station.

The process in Figure 5 is performed after the end of operation of the heavy machine 100. The process in Figure 5 may be performed during the operation of the heavy machine 100. For example, it is also possible to perform a batch process for performing the process in Figure 4 every 5 minutes or every 10 minutes, or to perform other processes. Further, it is also possible to employ a configuration in which the process in Figure 5 is performed in real time.

First, image data captured by the camera 101 is acquired (step S101). The image data acquisition unit 301 in Figure 3 performs this process. Next, data of the position of the reflective prism 102 measured by the total station 200 is acquired (step S102). The reflective prism position acquisition unit 302 in Figure 3 performs this process.

Next, the positions of features points in the local coordinate system based on images captured by the camera and the position and posture of the camera 101 are calculated based on the principle of SfM (step S103). The relative orientation unit 303 in Figure 3 performs this process.

If a scale (e.g., two targets with a known separation or other targets) is in the captured images, the above local coordinate system is given a scale, but it is non-essential to give a scale. Note that if a plurality of reference points with positions determined in the global coordinate system are in the captured images, it is possible to treat the above local coordinate system as the global coordinate system, but this is non-essential.

Step S103 calculates the positions in the local coordinate system of a large number of feature points extracted from the captured images. When no scale or reference points are given, step S103 obtains a relative three-dimensional relationship between the positions and postures of the camera (the number of which is equal to the number of captured images obtained by the camera during movement) and a large number of feature points.

Next, the initial value matching is performed (step S104). The initial value matching unit 304 in Figure 3 performs this process. Performing this initial value matching gives an approximate relationship between the position and time of the camera 101 in the local coordinate system and the position and time of the camera 101 in the global coordinate system.

Next, the adjustment calculation using Expression 1 and Expression 2 (the adjustment calculation considering the time series) is performed (step S105). This adjustment calculation is adjustment calculation considering a deviation between the time on the side of the camera 101 and the time on the side of the total station 200. This adjustment calculation determines the position and posture of the camera 101 in the global coordinate system and the positions in the global coordinate system of the large number of feature points obtained from the captured images obtained in step S103. The time-series-considered adjustment calculation unit 305 in Figure 3 performs this process.

Next, a three-dimensional model is created based on the feature points obtained from the captured images (step S106). The three-dimensional model creation unit 306 in Figure 3 performs this process. This makes it possible to obtain a three-dimensional model of the object captured by the camera 101 mounted on the heavy machine 100 in the global coordinate system.

(Summary)

Image data of a captured image captured by a camera 101 that moves while being mounted on a heavy machine 100 is obtained. A total station 200 measures a position of a reflective prism 102 that is a specific part fixed to the camera 101. A position of the camera 101 is calculated based on the measured position of the reflective prism 102. There is a deviation between a time of measurement of the position of the reflective prism 102 and a time of capturing by the camera 101. Adjustment calculation with the position of the camera 101 as an unknown number is performed in the calculation of the position of the camera 101. The adjustment calculation is performed based on the measured position of the reflective prism 101 to which a correction amount corresponding to the deviation between the times is added.

(Advantage)

In the creation of a three-dimensional model of a capturing object based on images captured by the camera 101 mounted on the heavy machine 100, even when the time of capturing by the camera 101 is unsynchronized with the time of positioning of the reflective prism 102, this embodiment can reduce errors caused by the effects thereof. This makes it possible to improve the accuracy of three-dimensional data based on images captured by a camera mounted on a moving object.

2. Second Embodiment

It is also possible to mount a GNSS positioning device on the heavy machine 100 and determine the position of the camera 101 on the heavy machine using this GNSS positioning device. This can eliminate the need for the reflective prism and the total station (of course, it is also possible to use them together). Although measurement of positions using GNSS contains errors, adjustment calculation can reduce errors of GNSS. The adjustment calculation performs calculation assuming that an antenna of the GNSS positioning device is installed instead of the reflective prism 102 in Figure 1. Further, using relative positioning such as the RTK method enables reduction of measurement errors. The handling of feature points, various types of orientation, and other data processing are the same as those in the first embodiment.

[Reference Signs List]

100 heavy machine, 101 camera, 102 reflective prism, 110 rotating part, 120 base part, 151 arm part, 152 bucket, 200 total station, 300 computing apparatus

**Claims**

1.  A surveying method comprising:

    obtaining image data of a captured image captured by a camera that moves;
    measuring a position of a specific part fixed to the camera; and
    calculating a position of the camera based on the measured position of the specific part, wherein
    there is a deviation between a time of measurement of the position of the specific part and a time of capturing of the captured image,
    adjustment calculation with the position of the camera as an unknown number is performed in the calculation of the position of the camera, and
    the adjustment calculation is performed based on the position of the specific part to which a correction amount corresponding to the deviation between the times is added.

2.  The surveying method according to claim 1, wherein

    a process of calculating an initial value for the adjustment calculation is performed, and
    in the process of calculating the initial value,
    a process is performed, the process being a process of determining correspondence between a start of movement and/or an end of movement of the position of the camera in a local coordinate system calculated based on the captured image captured by the camera and a start of movement and/or an end of movement of the position of the specific part in a global coordinate system.

3.  The surveying method according to claim 1, wherein

    a process of calculating an initial value for the adjustment calculation is performed, and
    in the process of calculating the initial value,
    correspondence is determined between a change in the position of the camera in a local coordinate system calculated based on the captured image captured by the camera and a change in the position of the specific part in a global coordinate system.

4.  The surveying method according to claim 3, wherein the changes in the positions are evaluated based on an angle formed by a first straight line connecting a first position and a second position and a second straight line connecting the second position and a third position.

5.  A surveying system comprising:

    means for obtaining image data of a captured image captured by a camera that moves;
    means for measuring a position of a specific part fixed to the camera; and
    means for calculating a position of the camera based on the measured position of the specific part, wherein
    there is a deviation between a time of measurement of the position of the specific part and a time of capturing of the captured image,
    adjustment calculation with the position of the camera as an unknown number is performed in the calculation of the position of the camera, and
    the adjustment calculation is performed based on the position of the specific part to which a correction amount corresponding to the deviation between the times is added.

6.  A program that a computer is caused to read and execute, the program causing the computer to execute:

acquisition of image data of a captured image captured by a camera that moves;
acquisition of measurement data of a position of a specific part fixed to the camera; and
calculation of a position of the camera based on the measured position of the specific part, wherein
there is a deviation between a time of measurement of the position of the specific part and a time of capturing of the captured image,
adjustment calculation with the position of the camera as an unknown number is performed in the calculation of the position of the camera, and
the adjustment calculation is performed based on the position of the specific part to which a correction amount corresponding to the deviation between the times is added.

## Fig. 1

151
101
102
300 (COMPUTING APPARATUS)
110
100 (HEAVY MACHINE)
152
120

200
(TOTAL STATION)

## Fig. 2

POSITION OF REFLECTIVE PRISM, MEASUREMENT TIME

$p_2, T_{p2}$
$p_{t2}, T_{pt2}$
$p_{t1}, T_{pt1}$
$p_3, T_{p3}$
$p_1, T_{p1}$
$p_{t3}, T_{pt3}$
L
L
L
$t_2, T_{t2}$
$t_1, T_{t1}$ POSITION OF CAMERA, MEASUREMENT TIME
$t_3, T_{t3}$

$p_1, T_{p1}$ : MEASURED POSITION AND MEASUREMENT TIME OF REFLECTIVE PRISM
$p_{t1}, T_{pt1}$ : MEASURED POSITION AND MEASUREMENT TIME OF REFLECTIVE PRISM CONSIDERING TIME SERIES
$t_1, T_{t1}$ : POSITION OF CAMERA AND CAPTURING TIME

Fig. 3

COMPUTING APPARATUS — 300

IMAGE DATA ACQUISITION UNIT — 301

REFLECTIVE PRISM POSITION
ACQUISITION UNIT — 302

RELATIVE ORIENTATION UNIT — 303

INITIAL VALUE MATCHING UNIT — 304

TIME-SERIES-CONSIDERED
ADJUSTMENT CALCULATION UNIT — 305

THREE-DIMENSIONAL MODEL
CREATION UNIT — 306

CAMERA CONTROL UNIT — 307

# Fig. 4

(A)

(B)

(C)

POSITION OF CAMERA

POSITION OF REFLECTIVE PRISM

Fig. 5

```
           ╭─────────────────────╮
           │  START OF PROCESSING │
           ╰─────────────────────╯
                     │
                     ▼
           ┌─────────────────────┐
           │ ACQUISITION OF IMAGE DATA │  ～ S 1 0 1
           └─────────────────────┘
                     │
                     ▼
           ┌─────────────────────┐
           │ ACQUISITION OF POSITION OF │  ～ S 1 0 2
           │   REFLECTIVE PRISM   │
           └─────────────────────┘
                     │
                     ▼
           ┌─────────────────────┐
           │  RELATIVE ORIENTATION │  ～ S 1 0 3
           └─────────────────────┘
                     │
                     ▼
           ┌─────────────────────┐
           │  INITIAL VALUE MATCHING │  ～ S 1 0 4
           └─────────────────────┘
                     │
                     ▼
           ┌─────────────────────┐
           │ ADJUSTMENT CALCULATION │  ～ S 1 0 5
           │ CONSIDERING TIME SERIES │
           └─────────────────────┘
                     │
                     ▼
           ┌─────────────────────┐
           │  CREATION OF THREE- │  ～ S 1 0 6
           │  DIMENSIONAL MODEL  │
           └─────────────────────┘
                     │
                     ▼
           ╭─────────────────────╮
           │  START OF PROCESSING │
           ╰─────────────────────╯
```

## INTERNATIONAL SEARCH REPORT

| International application No. |
|---|
| **PCT/JP2024/011633** |

| A. | CLASSIFICATION OF SUBJECT MATTER |
|---|---|

*G01C 11/36*(2006.01)i
FI: G01C11/36

According to International Patent Classification (IPC) or to both national classification and IPC

| B. | FIELDS SEARCHED |
|---|---|

Minimum documentation searched (classification system followed by classification symbols)

G01C11/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2009-042175 A (KOISHI KK) 26 February 2009 (2009-02-26)<br>entire text, all drawings | 1-6 |
| A | JP 2019-045425 A (KABUSHIKI KAISHA TOPCON) 22 March 2019 (2019-03-22)<br>entire text, all drawings | 1-6 |
| A | WO 2010/001940 A1 (KABUSHIKI KAISHA TOPCON) 07 January 2010 (2010-01-07)<br>entire text, all drawings | 1-6 |
| P, A | JP 2023-119313 A (MAC KK) 28 August 2023 (2023-08-28)<br>entire text, all drawings | 1-6 |
| P, A | WO 2024/057757 A1 (KABUSHIKI KAISHA TOPCON) 21 March 2024 (2024-03-21)<br>entire text, all drawings | 1-6 |
| E, A | WO 2024/062781 A1 (KABUSHIKI KAISHA TOPCON) 28 March 2024 (2024-03-28)<br>entire text, all drawings | 1-6 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

16

## INTERNATIONAL SEARCH REPORT
### Information on patent family members

International application No.

**PCT/JP2024/011633**

| Patent document cited in search report | | | Publication date (day/month/year) | Patent family member(s) | | | Publication date (day/month/year) |
|---|---|---|---|---|---|---|---|
| JP | 2009-042175 | A | 26 February 2009 | (Family: none) | | | |
| JP | 2019-045425 | A | 22 March 2019 | US entire text, all drawings EP CN | 2019/0073794 3454008 109461190 | A1 A1 A | |
| WO | 2010/001940 | A1 | 07 January 2010 | US entire text, all drawings EP | 2011/0096957 2309225 | A1 A1 | |
| JP | 2023-119313 | A | 28 August 2023 | (Family: none) | | | |
| WO | 2024/057757 | A1 | 21 March 2024 | JP entire text, all drawings | 2024-042417 | A | |
| WO | 2024/062781 | A1 | 28 March 2024 | JP entire text, all drawings | 2024-046228 | A | |

Form PCT/ISA/210 (patent family annex) (July 2022)

**EP 4 692 720 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8043093 A
- JP 2013186816 A
- WO 2011070927 A
- JP 2012230594 A
- JP 2014035702 A